# Europäisches Patentamt

## European Patent Office

## Office européen des brevets

(11) Veröffentlichungsnummer: **0 092 523**
**B1**

(12) **EUROPÄISCHE PATENTSCHRIFT**

(45) Veröffentlichungstag der Patentschrift:
**22.07.87**

(21) Anmeldenummer: **83810155.8**

(22) Anmeldetag: **15.04.83**

(51) Int. Cl.⁴: **G 05 B 19/10**

(54) **Schaltungsanordnung zur Programmsteuerung einer Maschine.**

(30) Priorität: **16.04.82 CH 2337/82**

(43) Veröffentlichungstag der Anmeldung:
**26.10.83 Patentblatt 83/43**

(45) Bekanntmachung des Hinweises auf die Patenterteilung:
**22.07.87 Patentblatt 87/30**

(84) Benannte Vertragsstaaten:
**AT BE CH DE FR GB IT LI LU NL**

(56) Entgegenhaltungen:
**EP-A-0 046 483**
**DE-A-1 610 208**
**FR-A-2 098 065**
**GB-A-1 086 120**
**US-A-4 084 237**
**US-A-4 195 232**

(73) Patentinhaber: **Maschinenfabrik Ad. Schulthess & Co.AG., Stockerstrasse 57, CH- 8039 Zürich (CH)**

(72) Erfinder: **Kägi, Rudolf, Breitenwies 2, CH- 8340 Hadlikon- Hinwil (CH)**

(74) Vertreter: **White, William, PATENTANWALTS- BUREAU ISLER AG Postfach 6940 Walchestrasse 23, CH- 8023 Zürich (CH)**

**Beschreibung**

Die vorliegende Erfindung betrifft eine Programmsteuereinrichtung für eine Waschmaschine gemäss dem Oberbegriff des Patentanspruchs 1.

Bei Waschmaschinen haben sich die Waschprogramme infolge der Automation auf wenige normierte Programmschritte, wie Vorwaschen, Klarwaschen, Spülen und Schleudern, verringert. In diesen Programmschritten müssen sich noch dem Verschmutzungsgrad und der Wäscheart entsprechende Veränderungen eingeben lassen. So ist es bekannt, das Vorwaschen zu wiederholen, unter Umständen mit verschiedenen Laugentemperaturen, das Klarwaschen bei bis vier verschiedenen Temperaturstufen durchzuführen, das Spülen in mehreren Spülgängen zu wiederholen und entweder intermittierend oder durchgehend zu schleudern, um die Wäsche zu entwässern oder diesen Programmschritt wegzulassen.

Zur Eingabe von Steuerbefehlen für die Aneinanderreihung dieser Programmschritte und zur Bemessung der jeweiligen Dauer der einzelnen Programmschritte wurden Steuergeräte entwickelt.

Bei einer ersten Art von Steuergeräten dient eine Lochkarte als Datenträger, die entweder gemäss der CH-A 344 393, gegenüber welcher der Anspruch 1 abgegrenzt ist, als länglicher Streifen aus starrem Material ausgebildet ist und in Längsrichtung in mehreren Bahnen angeordnete Ausnehmungen aufweist. Jede dieser Bahnen bewirkt das Ein- oder Ausschalten von elektrisch betätigten Steuermitteln, wie Relais, Schützen oder Ventile. Gemäss einer zweiten Ausführungsform gemäss der CH-A 398 486 ist die Lochkarte als kreisrunde Scheibe ausgebildet und die Bahnen sind konzentrisch zum Scheibenmittelpunkt angeordnet. Auch hier bewirken die Bahnen das Ein- und Ausschalten von Steuermitteln.

Während die streifenförmige Lochkarte in einem zugänglichen Lochkartenleser gelesen wird, wobei eine Auswahl verschiedener Programme zur Verfügung gestellt werden kann, ist bei der kreisförmigen Lochkarte keine Auswechslung durch den Benützer vorgesehen. Um trotzdem unterschiedliche Programme ablaufen zu lassen, besitzt der Antrieb eine Ausrückkupplung, um die Lochkarte voreinzustellen, so dass aus unterschiedlichen Anfangsstellungen heraus unterschiedliche Programme ablaufen können, wie dies beispielsweise in der CH-A 470 518 dargelegt ist.

Eine grundsätzlich andere Gattung einer Programmsteuereinrichtung ist in der CH-A 358 404 beschrieben. Als Programmgeber sind Nockenscheiben auf einer gemeinsamen Welle befestigt und die Welle wird durch eine Schaltklinke schrittweise rotiert. Für jedes vorgesehene Waschprogramm ist eine eigene Nockenscheibe vorgesehen.

Eine Weiterentwicklung ist beispielsweise in der CH-A 438 198 beschrieben, bei der ein von Hand einstellbarer Vorwählschalter vorhanden ist, der mit einem schrittweise angetriebenen Programmschalter verbunden ist. Eine Zeitraffereinrichtung gestattet, vorgewählte Programmschritte in einer kürzeren als die zur Steuerung üblichen Durchlaufzeit zu durchlaufen.

Bei allen Steuerarten besteht somit ein Bedarf an Eingriffsmöglichkeiten zur Veränderung eines gegebenen Programms zwecks Anpassung an individuelle Wünsche. Es ist bekannt geworden, noch zusätzliche Druckschalter vorzusehen, um einzelne Befehle der Datenträger zu übergehen und wenn möglich die Vorschubgeschwindigkeit während dieser Zeit zu erhöhen, um die Programmdauer zu verkleinern.

Aus der US-A 4 084 237 ist eine Programmsteuerung für Waschmaschinen bekannt, bei welcher mittels eines programmierbaren elektronischen Hauptprogrammspeichers und eines fest programmierten elektronischen Unterprogrammspeichers mehrere, durch Tasten abrufbare Waschprogramme synthetisiert werden. Durch Umprogrammieren des Hauptprogrammspeichers können die verfügbaren Waschprogramme den Kundenwünschen angepasst werden. Dazu sind Wahlschalter vorgesehen, die entweder im Herstellerwerk oder durch den Kundendienst einzustellen sind. Im Gegensatz zu lochkartengesteuerten Waschmaschinen ist also die Anpassung der Programme an andere Bedürfnisse des Kunden recht aufwendig.

Während die Steuernocken-Programmgeber von aussen nicht manipuliert und die Programme allenfalls während der Lebensdauer nur durch Auswechseln des gesamten Programmgebers an neue Gegebenheiten angepasst werden können, lässt sich bei den Streifen-Lochkarten ein neu gefundenes Programm auf einfache Weise herstellen und verwenden.

Bekannte Nachteile bei den wahlweise einsetzbaren Streifenlochkarten bestehen in der Empfindlichkeit auf mechanischen Beschädigungen, weil dadurch die sehr genau ausgemessenen Anfangs- und Endstellen der Aussparungen verändert werden können und der genaue Programmablauf dadurch gestört werden kann.

Die Aufgabe der vorliegenden Erfindung besteht darin, eine Programmsteuereinrichtung für Waschmaschinen zu schaffen, die ebenso leicht wie die bekannten Lochkartensteuerungen an geänderte Kundenwünsche angepasst werden kann, die jedoch bezüglich der Dauer der einzelnen Programmschritte eine höhere Genauigkeit erlaubt und weniger empfindlich auf mechanische Beschädigung und Abnützung des Programmträgers ist. Diese Aufgabe wird durch die kennzeichnenden Merkmale des Anspruchs 1 gelöst.

Ein Ausführungsbeispiel der Erfindung wird nachfolgend anhand der Zeichnung beschrieben.

Es zeigen:

Fig. 1 ein Prinzipschaltbild einer Programmsteuerung nach der Erfindung

Fig. 2 einen Grundriss eines Lochkartenlesegerätes,

Fig. 3 eine Ansicht auf den Steuerteil eines Schrittschalt-Programmgebers,

Fig. 4 einen Schaltplan für den Schrittschalt-Programmgeber nach Fig. 3 mit Wechselkontakt-Schaltern,

Fig. 5 eine schematische Darstellung der Wechselkontakt-Schalter zur Verwendung im Programmgeber für den Schaltplan nach Fig. 4, und

Fig. 6 ein Schaltungsschema für eine Programmsteuerung nach der Erfindung für eine Waschmaschine.

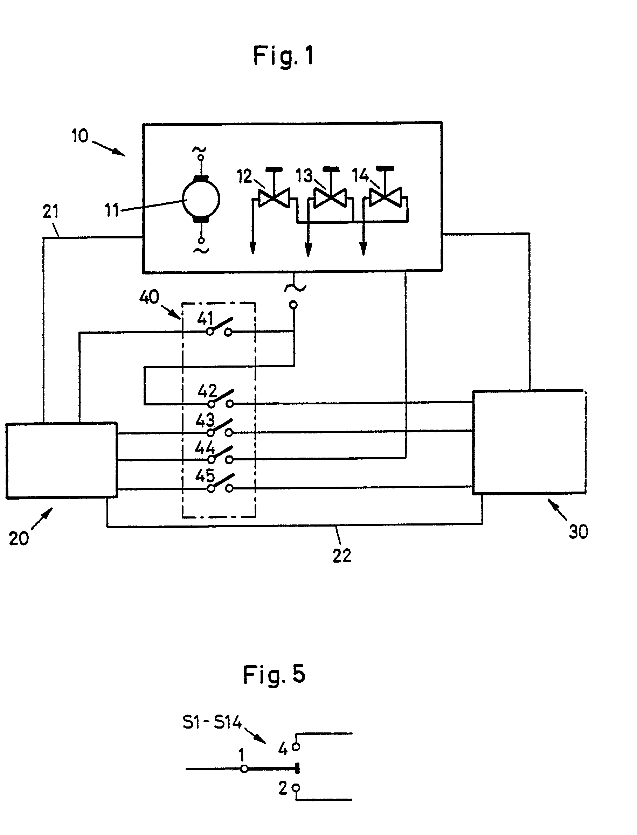

Gemäss Fig. 1 sind somit für die Steuerung einer Waschmaschine 10 mit einem Antriebsmotor 11 und beispielsweise drei Ventilen 12, 13, 14 als minimalste Anzahl Arbeitselemente neben beispielsweise einer Heizung zur Erwärmung des Wassers und Mitteln zur Veränderung der Motordrehzahl, ein Hauptbefehlsgeber 20, ein Datengeber 30 und verschiedene Drucktasten 40 vorhanden.

Als Hauptbefehlsgeber 20 ist ein Lochkartenlesegerät 200 vorgesehen, das die Reihenfolge der einzelnen Programmschritte aus einer Streifen-Lochkarte entnehmen und an die Waschmaschine 10 und an den Datengeber 30 geben kann. Befehle, die vom Hauptbefehlsgeber 20 direkt über eine Befehlsleitung 21 an die Waschmaschine 10 abgegeben werden, sind beispielsweise die Schaltbefehle für Thermoschalter zum Erwärmen der Flotte auf eine bestimmte Temperatur. Die übrigen Befehle sind über die Datenleitung 22 zum Datengeber 30 geführt. Von den fünf dargestellten Schaltern wird beispielsweise mit dem Schalter 41 die Einschaltung des Hauptstromkreises bewirkt, mit dem Schalter 42 die Anschaltung des Datengebers 30, mit dem Schalter 43 der Befehl zum Schleudern aus dem Hauptbefehlsgeber 20 mit dem Datengeber 30 in einen Befehl zum Intervall-Schleudern umgewandelt, mit dem Schalter 44 der Wasserpegel abgesenkt und mit dem Schalter 45 wird eine Verbindung zwischen dem Datengeber 30 und dem Hauptbefehlsgeber 20 zur Veränderung der Laufgeschwindigkeit des Lochkartenlesegeräts zwecks Verkürzung der Programmdauer geschaffen.

Als Datengeber 30 ist schliesslich ein Schrittschaltprogrammgeber 300 einer bekannten Bauart, beispielsweise ein Programmsteuergerät Typ 2HK4 der Firma Siemens AG, vorgesehen. Von diesem Programmsteuergerät können sämtliche Steuerbefehle für den Wasch- und Schleuderbetrieb ausgegeben werden, wie verschiedene Phasen des Zwischenschleuderns, verschiedene Stufen des Intervallschleuderns, des Endschleuderns und des Auflockerns der Wäsche, die immer sehr genau und während einer bestimmten Zeitdauer durchgeführt werden müssen.

Zum besseren Verständnis der Erfindung werden nachfolgend ein Lochkartenlesegerät, eine Programmsteuerung durch den Datengeber und ein Schaltschema beschrieben.

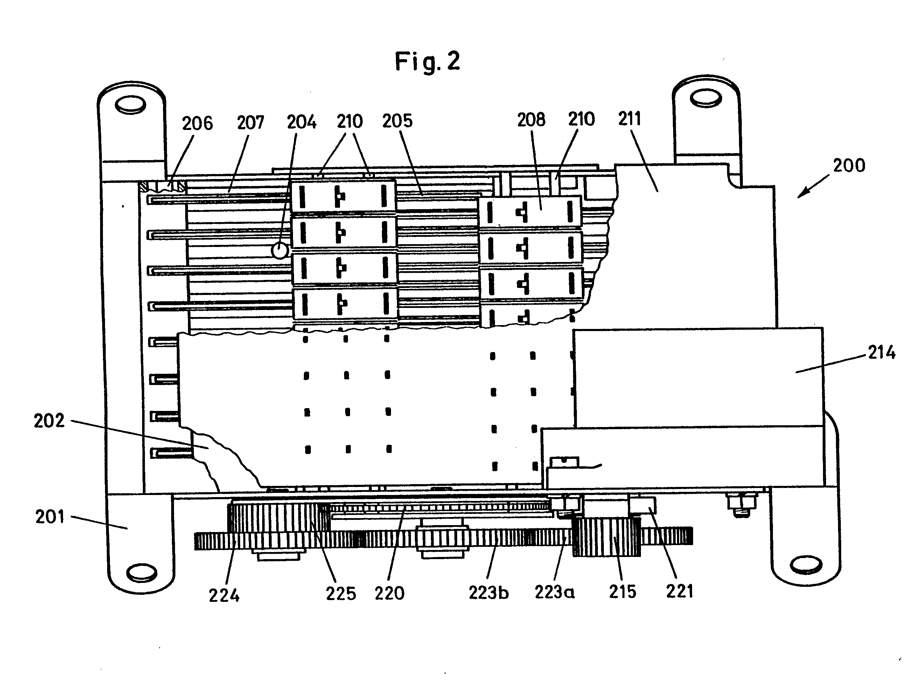

Das Lochkartenlesegerät 200 gemäss Fig. 2 als Hauptbefehlsgeber 20 in Fig. 1 ist auf einer Grundplatte 201 aufgebaut. Diese trägt eine untere Führungsplatte 202 und eine obere Führungsplatte für die Führung einer Streifen-Lochkarte. Mit Schrauben 204, von denen nur eine ersichtlich ist, ist die obere Führungsplatte auf der Grundplatte befestigt. Es sind insgesamt 16 Schalthebel 205 parallel nebeneinander und in Längsrichtung versetzt angeordnet. Diese Schalthebel 205 sind auf Schalthebelachsen 206, von denen nur eine ersichtlich ist, gehalten. Ein Kamm 207 dient zur Parallelführung der Schalthebel 205. 16 Schalter 208 sind in Querrichtung und in Längsrichtung versetzt an vier Schalterachsen 210 befestigt. Die Leitungen zu den Schaltern 208 hin und von diesen weg sind auf eine Leiterplatte 211 geführt, wo auch die notwendigen internen Verknüpfungen angeordnet sind. Ein Synchro-Motor 214 dient zum Antrieb und Vorschub der Streifen-Lochkarte. Ueber das Motorritzel 215 wird ein Getriebe mit drei Zahnrädern 223a, 223b und 224 angetrieben, von denen ein Transportrad 220 mit Zähnen zum Eingriff in eine Randlochung der Streifen-Lochkarten angetrieben wird. Ein spezielles Bremsrad 221 bewirkt, dass das Transportrad 220 in die Randlochung der Lochkarte eingeschwenkt wird. Das Transportrad 220 wird durch ein Antriebsrad 225 angetrieben, das seinerseits starr mit dem Zahnrad 224 gekoppelt ist.

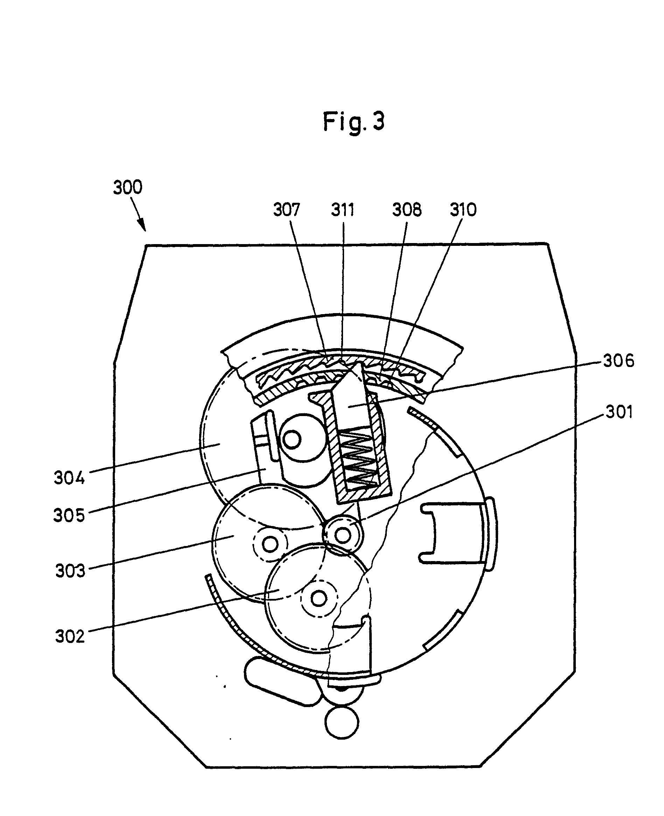

Fig. 3 zeigt eine Ansicht auf die Antriebsseite eines Schrittschalters 300, der als Datengeber 30 in Fig. 1 eingesetzt sein kann. Der Schrittschalter besteht in üblichem Aufbau aus Antriebsteil mit Synchronmotor mit Dauermagnetrotor, Getriebe und Antriebsschwinge, ferner aus Steuer- und Zeitgeberwalze und dem Kontaktsatz.

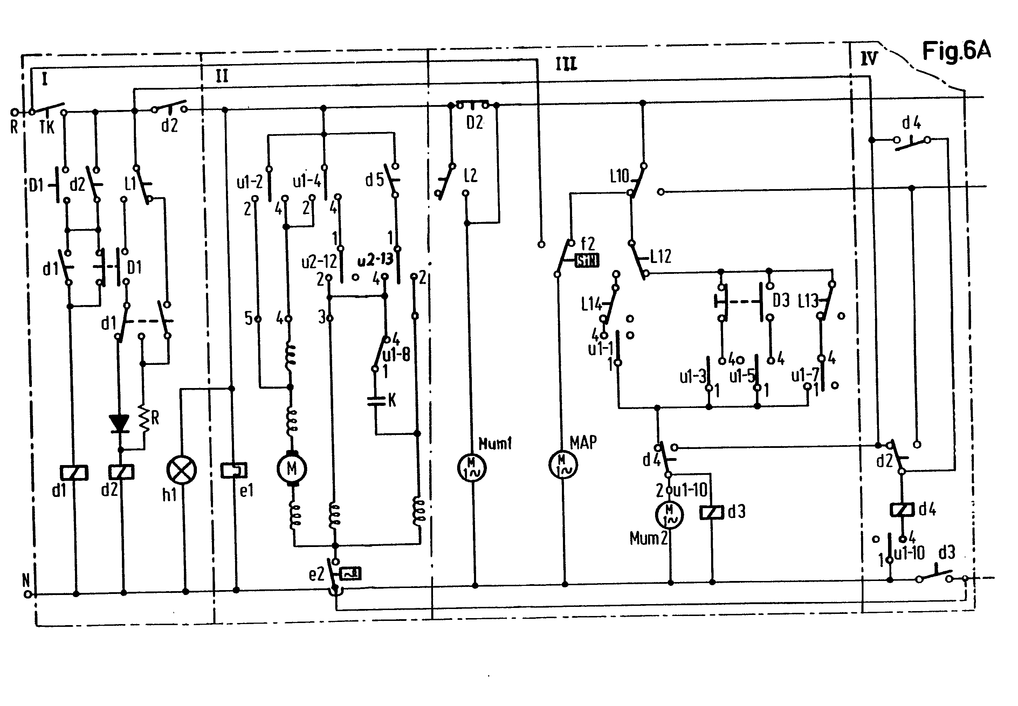

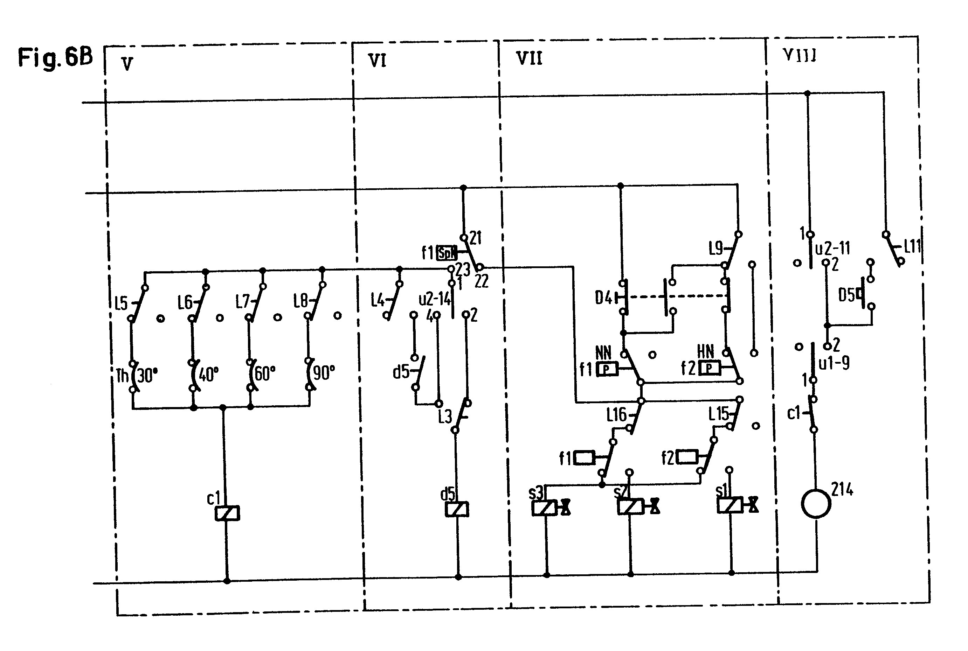

Der Motor Mum 1 (Fig. 6) treibt über das Antriebsritzel 301, ein Getriebe mit den Zahnrädern 302, 303 und 304 eine Schwinge 305 an, welche Schwinge an ihrem äusseren Ende den Transportstift 306 für die Weiterschaltung der Programmwalze 307 und der Zeitgeberwalze 308 trägt.

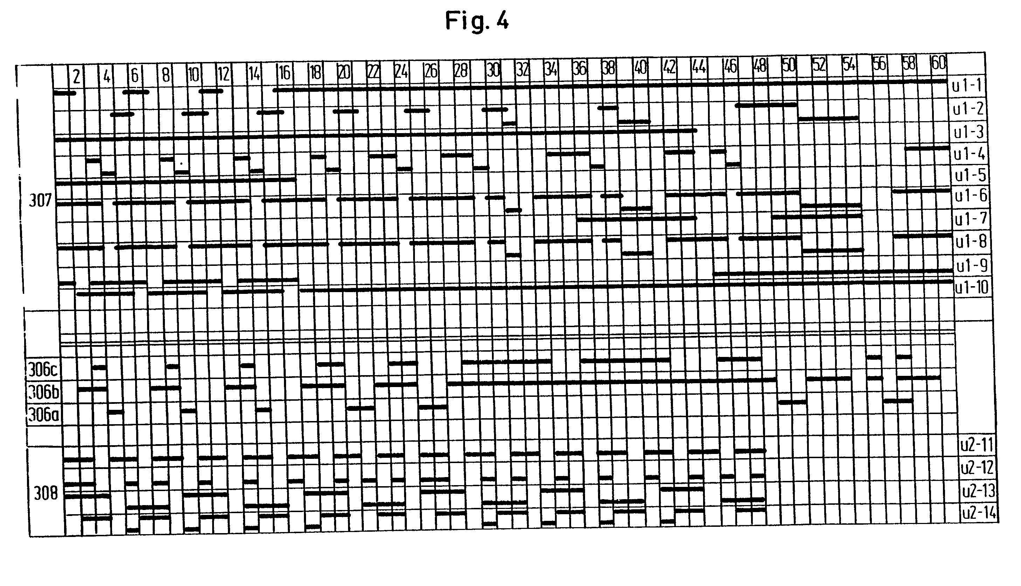

Der Transportstift 306 arbeitet auf eine Verzahnung 310 der Zeitgeberwalze 308, um diese schrittweise anzutreiben. Wenn der Transportstift 306 auf einen Steuerschlitz trifft, greift er in die Verzahnung 311 der Programmwalze 307 ein und treibt diese mit der Zeitgeberwalze 308 zusammen um eine Position weiter. Da ein Steuerschlitz vorhanden ist, wird der Arbeitstakt der Programmwalze 307 durch die Umlaufgeschwindigkeit der Zeitgeberwalze 308 bestimmt. In der vorgesehenen Ausführungsform sind gemäss Fig. 4 drei Transportstifte 306a, 306b und 306c vorhanden, wodurch unterschiedliche Schrittzeiten als Vielfache des Zeitgeberschrittes auf die Programmwalze 307 einwirken. Mit einem zusätzlichen Schnellgangmotor Mum 2 in Fig. 6 wird die Programmwalze 307 über ein Untersetzergetriebe mit Freilaufeinrichtung mit einer höheren Drehzahl angetrieben.

In Fig. 5 sind die Schaltkontakte U1-1 bis U1-14 des Kontaktsatzes des Schrittschalters 300 mit dem beweglichen Schalteranschluss 1 und den beiden festen Schalteranschlüssen 2, 4 herausgezeichnet. Im Kontaktschema Fig. 4 ist der Schalteranschluss 4 jeweils in der oberen Hälfte des Feldes und der Schalteranschluss 2 in der unteren Hälfte des Feldes dargestellt.

Es sind 10 Kontaktbahnen U1 mit der Programmwalze 307 und 4 Kontaktbahnen U2 mit der Zeitgeberwalze 308 vereinigt. In der Darstellung gemäss Fig. 4 sind zwischen der Programmwalze 307 und der Zeitgeberwalze 308 die Verzahnungen für die Transportstifte 306a, 306b und 306c dargestellt.

Im Schaltungsschema Fig. 6 ist eine vollständige Steuerung für eine Waschmaschine dargestellt. Es lassen sich acht grundsätzliche Abschnitte unterscheiden:

Der Abschnitt I beinhaltet die Schalter für Programm-Startstop. Im Abschnitt II sind die elektrischen Verbindungen für den Antrieb der Waschtrommel durch den Motor M bei Waschen im Reversierbetrieb, Schwingen und Auflockern dargestellt.

Der Abschnitt III umfasst die interne Steuerung vom Lochkartenlesegerät 200 zum Schrittschalter 300 und der Abschnitt IV umfasst eine Anordnung für die Fehlschaltsicherheit. Im Abschnitt V ist die Programmsteuerung für die Temperaturwahl, z. B. 30, 40, 60 und 90°, untergebracht, während die Zyklussteuerung für Reversierbetrieb bei Schongang und Normalgang im Abschnitt VI liegt.

Der Abschnitt VII umfasst die Steuerung für die Wasserzuleitung und die Einstellung des Pegels und schliesslich umfasst der Abschnitt VIII noch die zeitliche Steuerung des Lochkartenlesegerätes 200.

Im einzelnen und ausführlicher beschrieben sind also ein Lochkartenlesegerät 200, ein Schrittschalter 300 und ein Drucktastengerät 40 vorhanden. Die Schalter 208 im Lochkartenlesegerät 200 sind im Schaltungsschema mit L1 bis L16 bezeichnet. Die Kontaktbahnen der Programmgeberwalze 307 tragen die Bezeichnung U1 und die der Zeitgeberwalze 308 die Bezeichnung U2. Die Drucktasten sind mit D1 - D5 angeschrieben.

Die Netzspannung wird über die Anschlüsse R für die Phase und N für Nulleiter zugeführt. Wenn nun eine Lochkarte den Schalter L1 geschlossen hält, werden durch Drücken der Drucktaste D1 das Remanenz-Relais d2 sowie das Relais d1 aufgezogen, und diese beiden Relais d1, d2 halten sich über die zugehörigen Kontakte d1, d2 solange als der Schalter L1 geschlossen ist. Über einen weiteren Kontakt des Relais d2 wird eine Signallampe h1 angeschlossen und es gelangt Strom auf den Antrieb im Abschnitt II.

Im Antriebssteuerteil, Abschnitt II, werden bei einem handelsüblichen Kollektormotor h1 mit drei bis vier verschiedenen Drehzahlen über Kontakte der Programmwalze 307 die verschiedenen Statorwicklungen zu- und abgeschaltet. Der Motor M läuft im Normalgang mit der Reversiersteuerung durch den Schalter U2-13 der Zeitsteuerwalze 308, wenn das Relais d5 im Abschnitt VI angezogen hat, das heisst, wenn der Niveauschalter SpN für das Sparniveau umgeschaltet hat und entweder der Kontakt U2-14 in Serie zum Schalter L3 liegt, oder die Schalter L3 und L4 in Serie zum bereits aufgezogenen Relais d5 geschlossen sind. Dann ist der Kontakt d5 im Abschnitt II geschlossen und mit dem Kontakt U2-13 der Zeitsteuerwalze 308 wird der Reversierbetrieb im Normalgang gesteuert. Mit den Schalterbahnen für die Kontakte U1-2 und U1-4 der Programmsteuerwalze 307 wird zwischen Auflockern/ Schleudern Stufe 1 und Schleudern Stufe 2/Endschleudern geschaltet. In Serie zum Anschluss 4 des Kontaktes U1-4 liegt noch der Schaltkontakt U2-12 der Zeitsteuerwalze 308, der jeweils für Gleichlauf/Auflockern den Stromkreis zum Motor M schliesst.

Die Wicklungen des Motors M sind in Serie zu einem Übertemperaturschalter e2 am Nulleiter N nach einem Kontakt d3 des Relais für Verbraucherabtrennung angeschlossen. Der Antriebsmotor Mum1 für den Normalbetrieb des Schrittschalters 300 erfolgt mit der Parallelschaltung des Schalters L2 und der Drucktaste D2. Parallel zum Antriebsmotor Mum1 liegt auch die Steuerung für den Antriebsmotor 214 des Lochkartenlesegerätes 200 im Abschnitt VIII (Fig. 6B). Mit dieser Parallelschaltung von Schalter L2 und Drucktaste D2 wird bewirkt, dass nach dem Spülen der Programmablauf angehalten werden kann.

Im Abschnitt III liegt die Befehlsabgabe für das Programm "Zwischenschleudern", nämlich mit dem Kontakt U1-1, das Programm "Endschleudern" mit dem Kontakt U1-3, das Programm "Intervallschleudern" mit dem Kontakt U1-5 und das Programm für "Programm-Unterbruch" des Lochkartenlesegerätes 200, beispielsweise während des Endschleuderns oder des 4. Intervallschleuderns.

Der Programmbefehl "Zwischenschleudern" kann durch den Kontakt U1-1 nur dann gegeben werden, wenn die seriegeschalteten Schalter L10, L14 nicht betätigt und der Schalter L12 betätigt ist. Der Programmbefehl "Intervallschleudern" kann durch den Kontakt U1-5 nur bei gedrückter Drucktaste D3 entstehen.

Wenn eine solche Schalterstrecke geschlossen ist, erhält der Schnellgangmotor Mum2 im Schrittschalter 300 Strom, aber nur während des Befehls "Zwischenschleudern" über die Schalter L10, L12, L14 und den Kontakt U1-1.

Mit der Fehlschaltsicherung im Abschnitt V zieht das Relais d4 bei erregtem Relais d2, wenn der Schalter L10 umgeschaltet hat, also keine Schleuderart vorgesehen ist und gleichzeitig der Kontakt U1-10 für die Weiterführung der Programmwalze 307 im Schnellgang geschlossen ist. Solange das Relais d4 erregt ist, läuft der Motor Mum2.

Ein Wasserpegelschalter SiN, der bei Erreichen des maximalen Niveaus durch den Wasserstand umgeschaltet wird, betätigt bei zu hohem Wasserstand den Ablaufpumpenmotor MAP. Im Normalfall wird dieser Motor MAP mit dem Schalter L10 betätigt.

Gemäss der dargestellten Verdrahtung im Abschnitt V werden die einzelnen Temperaturüberwachungen mittels Thermostaten Th durch die Schalter L5-L8 angeschaltet und die Heizungen werden dementsprechend gespeist. Im anschliessenden Abschnitt VI wird in Abhängigkeit des Wasserniveaus bei Sparbetrieb mit dem Pegelschalter SpN das Relais d5, das einen Kontakt im Abschnitt II besitzt, erregt, und zwar hält sich das Relais d5, wenn mit dem Lochkartenlesegerät die beiden Schalter L3 und L4 geschlossen sind, über den Haltekontakt selbst, sobald der Kontakt U2-14 des Zeitgebers 308 einmal die Schaltstrecke 1 - 4 geschlossen hat. Bei offenem Schalter L4 wird mittels des Kontaktes U2-14 das Relais d5 periodisch betätigt, wodurch bei der einen Schalterstellung des Kontaktes U2-14 die Laufdauer des Antriebsmotors M doppelt so lange ist wie im andern Fall. Das Relais d5 fällt in den Zwischenzeiten ab und der Antriebsmotor M steht still.

Die Ventile S1, S2, S3 im Abschnitt VII zum Auffüllen des benötigten Wasserstandes werden durch die Schalter L9, L15 und L16 nebst zwei Niveauschaltern NN, HN für Normalniveau bzw. Woll-/Spülniveau und einer Drucktaste D4 für Sparprogramm gesteuert.

Schliesslich ist im Abschnitt VIII eine zeitliche Steuerung für den Motor 214 im Lochkartenlesegerät 200 enthalten. Im Normalbetrieb erhält der Motor 214 Strom über die in Reihe geschalteten Kontakte U1-9 und U2-11 während des Zwischenschleuderns und während des Endschleuderns und Auflockerns, und zwar impulsweise während 2/3 der Laufzeit der Zeitgeberwalze 308. Wenn dagegen mit der Drucktaste D5 das Kurzprogramm gewählt wird, so erhält der Motor 214 den Speisestrom nach Massgabe des Schalters L11 und während den oben genannten Schleuderphasen kontinuierlich mittels des Kontaktes U1-9 der Programmwalze 307.

Durch diese Kombination von Lochkartensteuerung 200 und Zeitsteuerung mit einer schrittgeschalteten Programmwalze 307 müssen die Steuerausnehmungen in den Lochkarten nicht mehr mit den bisher benötigten kleinen Toleranzen gefertigt werden und es genügt, wenn die Lochkarte die wesentlichen programmschritte einleitet. Die Durchführung der Abläufe während der einzelnen Programmschritte übernimmt die Programmwalze 307 mit äusserster Präzision, weil bei einem Umlauf der Zeitgeberwalze 308, der beispielsweise 175 s dauern kann, für jeden einzelnen Schritt 3,65 s zur Verfügung stehen.

Die Abläufe der Programmwalze 307 des Schrittschalters 300 stellen somit Unterprogramme dar, die durch das Lochkartenlesegerät 200 abgerufen werden können. Vor und nach Ablauf eines ausgewählten Unterprogramms synchronisieren sich die beiden Steuergeräte selbsttätig und das Lochkartenlesegerät 200 steuert den Waschprozess wieder allein. Es ist somit möglich, jederzeit genaue Programmzyklen aus dem Schrittschalter 300 mit starrer Programmierung abzurufen und zu einem geordneten Waschprogramm zusammenzustellen. Durch die Schaltungsanordnung im Abschnitt IV ist die Fehlschaltsicherheit beim Verschieben der Lochkarte im Lochkartenlesegerät 200 gewährleistet.

Obwohl die Befehlsgabe grundsätzlich vom Lochkartenlesegerät 200 zum Schrittschalter 300 erfolgt, wodurch ein Befehlsgeber-Befehlsempfänger-Verhältnis festgelegt ist, kann der Schrittschalter 300 mittels der Kontaktbahn U2-11 die Vorschubgeschwindigkeit verlangsamen. Für die Zuordnung der verschiedenen Vorschubgeschwindigkeiten ist jedoch das Lochkartenlesegerät 200 ebenfalls bestimmend.

Die zusätzlichen fünf Drucktasten D1 bis D5 gestatten einen weiteren Eingriff in ein bestehendes Programm. So kann mit der Drucktaste D2 bei normalem Waschprogramm der Befehl "Stop nach Spülen" eingegeben werden, wodurch das Schleudern entfällt. Die Drucktaste D3 führt zusammen mit der Kontaktbahn U1-5 der Programmwalze 307 ein zusätzliches Programm "Intervallschleudern" ein.

Dabei werden die folgenden Schritte durch die Programmwalze 307 des Schrittschalters 300 bewirkt:

1. das Lochkartenlesegerät 200 wird auf den Startzeitpunkt des Schrittschalters 300 synchronisiert;

2. der Gleichlauf wird bei Waschdrehzahl des Antriebsmotors M durch den Kontakt U1-4 bewirkt, indem die Anschlüsse 1 - 4 überbrückt sind;

3. der Antriebsmotor M wird während der Zeit, in der der Kontakt U1-4 die Anschlüsse überbrückt, auf die erste Schleuderstufe beschleunigt;

4. der Antriebsmotor M wird durch den Kontakt U1-2 auf die zweite Schleuderdrehzahl beschleunigt;

5. die beiden Anschlüsse 1-2 der Kontaktbahn U1-4 und 1-2 der Kontaktbahn U1-2 werden geöffnet und der Antriebsmotor M ist damit stromlos und die Trommel wird durch Reibung abgebremst;

6. als letztes schaltet der Kontakt U1-4 und verbindet die Anschlüsse 1 - 4, wodurch eine Auflockerungsdrehzahl bewirkt wird.

Dieser Ablauf wird viermal wiederholt.
Die Drucktaste D4 bewirkt ein "Sparprogramm", d.h. es wird weniger Wasser benötigt als für das Normalprogramm. In den Abschnitten VI und VII wird bei Erreichen des Sparniveaus, d.h. wenn der Pegelschalter SpN schaltet, die Wasserzufuhr gestoppt. Mit dem Schalter L3 wird zwischen den beiden Betriebsarten der Kontaktbahn U2-14 gewählt, wodurch die Trommel entweder während 1/3 oder 2/3 einer Zeitperiode von 3 x 3,65 s rotiert wird. Wenn durch den Lochkartenleser 300 jedoch der Schalter L4 geschlossen wird, so arbeitet der Antriebsmotor M gemäss dem Waschtakt der Zeitgeberwalze 308 in der Kontaktbahn U2-13.

Durch Wahl des "Kurzprogramms" mit der Drucktaste D5 wird im Lochkartenlesegerät der Motor 214 nicht durch die Kontaktbahn U2-11 während 2/3 der Zeit angeschaltet, sondern er bleibt infolge der Steuerung durch den Schalter L11 und durch die Kontaktbahn U1-9 in den Schleuderphasen dauernd angeschaltet.

Durch diese verschiedenen individuell wählbaren Befehle kann ein Programm stark verkürzt oder verlängert werden.

## Patentansprüche

1. Programmsteuereinrichtung für eine Waschmaschine mit einem Lochkartenleser (200) zur Steuerung von aus Ventilen (s1, s2, s3) und einem Motor (M) bestehenden Arbeitselementen der Waschmaschine, dadurch gekennzeichnet, dass zwischen den Lochkartenleser (200) und mindestens einigen der Arbeitselemente (s1, s2, s3, M) ein vom Lochkartenleser (200) gesteuerter Schrittprogrammgeber (300) geschaltet ist, der die Arbeitselemente (s1, s2, s3, M) über feste, im Schrittprogrammgeber (300) gespeicherte und vom Lochkartenleser (200) aufgerufene Unterprogramme steuert, wobei vor und nach Ablauf eines ausgewählten Unterprogramms der Lochkartenleser (200) den Waschprozess allein steuert, und dass der Schrittprogrammgeber (300) eine die Unterprogramme enthaltende Programmwalze (307) und eine Zeitgeberwalze (308) umfasst, wobei über die Zeitgeberwalze (308) auch die zeitliche Steuerung für einen Antriebsmotor (214) des Lochkartenlesers (200) zum Transport der Lochkarte erfolgt.

2. Einrichtung nach Anspruch 1, dadurch gekennzeichnet, dass sie manuell betätigbare Schalter (D1-D5) zur Abgabe von individuell wählbaren Befehlen zur Abänderung des vorgegebenen Programmablaufs umfasst.

## Claims

1. A programme control device for a washing machine with a punched card reader (200) for controlling the working elements of the washing machine which consist of valves (s1, s2, s3) and a motor (M), characterised in that an intermittent programme transmitter (300) controlled by the punched card reader (200) is connected between the punched card reader (200) and at least one of the working elements (s1, s2, s3) and controls the working elements (s1, s2, s3) via fixed subprogrammes stored in the intermittent programme transmitter (300) and retrieved by the punched card reader (200), the punched card reader (200) controlling the washing process alone before and after the course of a selected subprogramme, and in that the intermittent programme transmitter (300) comprises a programme drum (307) containing the subprogramme and a time-transmitter drum (308), the time control for a drive motor (214) of the punched card reader (200) for transporting the punched card also taking place via the time transmitter drum (308).

2. A device according to claim 1, characterised in that it comprises manually operable switches (D1-D5) for giving individually selectable commands for changing the prescribed course of the programme.

## Revendications

1. Agencement de commande par programme pour une machine à laver comportant un lecteur de cartes perforées (200) pour commander des éléments de travail de la machine à laver comprenant des soupapes (s1, s2, s3) et un moteur (M), caractérisé en ce qu'il est monté entre le lecteur de cartes perforées (200) et au moins quelques-uns des éléments de travail (s1, s2, s3, M) un programmateur pas à pas (300) commandé par le lecteur de cartes perforées (200), qui commande les éléments de travail (s1, s2, s3, M) par l'intermédiaire de sous-programmes fixes, mémorisés dans le programmateur (300) et appelés par le lecteur de cartes perforées (200), le lecteur de cartes perforées (200) commandant seul le processus de lavage, avant et après le déroulement d'un sous-programme sélectionné, et en ce que le programmateur pas à pas (300) comprend un cylindre de programme (307) contenant les sous-programmes et un cylindre rythmeur (308), la commande en fonction du temps pour un moteur d'entraînement (214) du lecteur de cartes perforées (200) destiné au transport des cartes perforées étant également effectuée par l'intermédiaire du cylindre rythmeur (308).

2. Agencement selon la revendication 1, caractérisé en ce qu'il comprend des interrupteurs (D1 - D5) actionnables manuellement pour délivrer des instructions pouvant être sélectionnées individuellement pour modifier le déroulement du programme prédéterminé.

## Fig. 1

## Fig. 5

Fig. 2

## Fig. 3

# Fig. 4

0 092 523

Fig.6A

0 092 523

Fig.6B

0 092 523